# EUROPÄISCHE PATENTSCHRIFT

(11) **EP 0 893 230 B1**
(45) Veröffentlichungstag und Bekanntmachung des Hinweises auf die Patenterteilung: **27.11.2002**
(21) Anmeldenummer: 98112623.8
(22) Anmeldetag: 08.07.1998
(51) Int. Cl.: B29C 49/42, B29C 49/56

(54) **Verfahren und Vorrichtung zum Herstellen von abfallarmen 3D-Blasformteilen**
Method and apparatus for manufacturing of three dimensional parts and reducing waste material
Procédé et dispositif pour la fabrication de pièces tridimensionnelles moulées par soufflage réduisant la formation de déchets

(30) Priorität: 08.07.1997 DE 19729052
(43) Veröffentlichungstag der Anmeldung: 27.01.1999
(73) Patentinhaber: SIG Kautex GmbH & Co. KG, 53229 Bonn (DE); Wolff, Joachim, 53824 Troisdorf (DE)
(72) Erfinder: Wolff, Joachim, 53842 Troisdorf (DE)
(74) Vertreter: Valentin, Ekkehard, Dipl.-Ing.

(56) Entgegenhaltungen:
- EP-A- 0 693 358
- US-A- 3 408 692
- US-A- 4 645 447

## Beschreibung

Die Erfindung betrifft ein Verfahren und eine Vorrichtung zum Herstellern von abfallarmen 3D-Teilen, insbesondere auf einer Blasformmaschine, die einen einen schlauchartigen Vorformling erzeugenden Extrusions- bzw. Coextrusionskopf, einen Schlauchabschneider, einen als Wendevorrichtung ausgebildeten Greifer zum Einlegen des Vorformlings in ein in einem Blasformwerkzeug eingearbeitetes Formnest bzw. Gravur, einen Blasdorn bzw. -nadel und eine Fertigartikel-Entnahmeeinrichtung aufweist.

Das Herstellen von abfallarmen, nahtlosen 3D-Blasformteilen ist eine seit langem bekannte Technik. Die nahtlos geblasenen Teile werden hierbei dadurch hergestellt, daß der Vorformling, d.h. der extrudierte Schlauch beim Schließen der Blasform am Umfang nicht abgequetscht wird, sondern vollständig von der Kavität umschlossen ist. Die beiden Endstücke müssen dabei allerdings durch Abquetschen verschlossen werden, um das Aufblasen des Vorformlings durch Nadel- oder Blasdorneinschießen zu ermöglichen. Wie durch die DE-Z "PLASTVERARBEITER" 44. Jahrgang 1993 Nr. 12, Seiten 44 bis 49 weiterhin bekanntgeworden, sind als solche hinlänglich bekannte Blasformmaschinen (vgl. z.B. DE 29 27 098 C2) dadurch in einen vollautomatischen Herstellungsprozeß eingebunden worden, daß der schlauchartige Vorformling von der Düse des Schlauchkopfes durch einen mechanischen Greifer abgenommen wird, der sich dann nach der Kontur der Kavität verformt. Dieser in der Regel frei programmierbare Sechs-Achsen-Einlegeroboter legt den Vorformling folglich voll automatisch in die Blasform ein, die auf einer entweder horizontalen oder vertikalen Schließeinheit aufgespannt ist. Aus der DE-Z ist es auch bekannt, die Manipulation des Vorformlings durch in der Blasform angeordnete Werkzeugschieber vorzunehmen.

Ein solches Einlegeverfahren wird aber hauptsächlich für Blasteile abgewendet, die geringe Bauteilkrümmungen aufweisen. Hierbei werden bestimmte, auf der Formtrenn-Ebene liegende Schieber zurückgefahren, wodurch sich verhindern läßt, daß beim Schließen der Blasform diese Bereiche des Vorformlings abgequetscht werden. Nachdem die Schließeinheit das Blasformwerkzeug in üblicher Weise geschlossen hat, werden die Werkzeugschieber wieder vorgefahren und der Vorformling aufgeblasen.

Der Anlagenaufwand der für das beschriebene Blasformverfahren genutzten herkömmlichen Blasformmaschinen ist nicht zuletzt wegen der als unumgänglich erachteten Schließeinheit sehr groß, auch deshalb, weil damit zwangsläufig entsprechende Hydraulikeinheiten verbunden sind. Außerdem erfordern die Schließeinheiten eine zusätzliche Steuerung und Regelung der Bewegungen zum Öffnen und Schließen der Formhälften.

Der Erfindung liegt die Aufgabe zugrunde, ein gattungsgemäßes Verfahren und eine Vorrichtung zu schaffen, die das Herstellen von 3D-Teilen mit sehr viel geringerem Aufwand ermöglicht, und zwar sowohl beim Blasformen als auch beim Saugblasen.

Diese Aufgabe wird gemäß einem Verfahren erfindungsgemäß dadurch gelöst, daß der von der Wendevorrichtung ergriffene Vorformling in ein durch Auffahren von komplementäre Formnestkavitäten aufweisenden Schiebern geöffnetes Teil-Formnest einer ohne eine Schließeinheit betriebenen Blasform eingelegt und nach dem Zufahren der Schieber zu einem Fertigartikel aufgeblasen wird, wobei die Schieber die Schließkraft aufbringen. Die Erfindung nützt hierbei die Erkenntnis aus, daß die für das abfallarme Blasformen bzw Saugblasen benötigte Schließkraft ohne weiteres von den Schiebern aufgebracht und die Blasformmaschine damit ohne Schließeinheit betrieben werden kann. Bedingt durch den Wegfall der Schließeinheit ist der Platzbedarf wesentlich geringer, wie gleichzeitig auch der Steuerungs- und Regelungsaufwand entscheidend reduziert wird und sich die hydraulische Einrichtung sehr viel kleiner dimensionieren bzw. auslegen läßt. Weiterhin bedarf es keiner Formtrennung von Formhälften mehr, so daß sich der ohne weiteres sogleich das durch Auffahren der Schieber geöffnete Teil-Formnest, z.B. die Kavität eines mit den Schiebern zusammenwirkenden Unterblockes der Blasform, einlegen läßt. Der Schlauch bzw. Vorformling wird danach ausschließlich durch in der Regel hydraulisch betätigte Schieber, die die Formnest-Kavität bilden und vollständig verschließen, fixiert.

Eine Vorrichtung zum Durchführen des Verfahrens sieht erfindungsgemäß vor, daß die Blasformmaschine mit einer Schieberblasform ausgebildet ist, die einzelne, einander gegenüberliegend angeordnete komplementäre Formnestkavitäten aufweisende, die Schließkraft aufbringende Schieber besitzt. Die Blasform braucht nicht mehr insgesamt aufgemacht zu werden, sondern das Öffnen des Formnestes zum Einlegen des Vorformlings wird in einfacher Weise durch die hier lediglich noch anzusteuernden Schieber erreicht, deren Geschwindigkeiten sich zum Beispiel durch Drosseln regeln lassen. Die schließeinheitenlose Schieberblasform ermöglicht einen einfachen und schnellen Formwechsel, weil sie als Einheit komplett gewechselt werden kann.

Eine Ausgestaltung der Erfindung sieht vor, daß die Stellzylinder der Schieber an einem Blasformrahmen abgestützt sind. Dieser reicht aus, um die auftretenden Kräfte aufnehmen zu können.

Wenn nach einem bevorzugten Vorschlag der Erfindung die Schieberblasform aus einem massiven Unterblock, der das Formnest für die untere Artikelgeometrie aufweist, und darauf angeordneten Schiebern, die einander ergänzend mit den Formnestkavitäten für die obere Artikelgeometrie versehen sind, besteht, kann - anders als bei sowohl die untere als auch die obere Artikelgeometrie bestimmend eingesetzten Schiebern - der Rahmen sogar ganz entfallen, da sich in diesem Fall die Schieber vorteilhaft am ohnehin vorhandenen Unterblock abstützen können. Die Ausführung der Schieberblasform mit einem massiven Unterblock bietet außerdem noch den Vorteil, daß das Formnest bzw. die Kavität nur noch in einem Block eingefräst zu werden braucht, wohingegen bisher beide Formhälften eines herkömmlichen Blasformwerkzeuges durch Fräsen bearbeitet werden mußten; somit ergibt sich ein geringerer Fräsaufwand und wird außerdem Material gespart.

Die Erfindung sieht vor, daß der Unterblock aus Aluminium oder aus anderen vergleichbaren Materialien mit guter Wärmeleitfähigkeit besteht. Im Gegensatz zu den üblichen Formhälften aus Stahl läßt sich damit eine verbesserte Kühlwirkung erzielen. Dennoch ist der Unterblock ausreichend stabil, um die verglichen mit den bei einer Schließeinheit auftretenden Kräften wesentlich kleineren Schieberkräfte hinlänglich aufnehmen zu können.

Es empfiehlt sich, in dem Unterblock feste, an den Stellzylindern der Schieber angeschlossene Druckmittel-Zuführungsleitungen auszubilden und somit eine baulich einfache und geschützte Druckmittelzuleitung zu erreichen.

Gemäß einem weiteren Vorschlag lassen sich zumindest zwei Schieberblasformen auf einer linearen oder drehbaren Transfereinrichtung anordnen. Hierbei kann es sich um ein Schienensystem, einen getakteten Drehteller oder ähnliches handeln, um die Blasformen zwischen der Einlege-, Blas- und Entnahmestation zu verfahren. Somit wird die stündliche Leistung der durch lediglich einen Roboter beschickten Schieberblasformen erhöht. Es versteht sich, daß hierbei der Extruder mit einer entsprechenden Leistung ausgelegt werden muß.

Weitere Einzelheiten und Vorteile der Erfindung ergeben sich aus den Patentansprüchen und der nachfolgenden Beschreibung, in der Ausführungsformen der Erfindung zum Blasformen von Artikeln dargestellt sind. Es zeigen:
- Fig. 1: als Einzelheit Einzelheit nicht dargestellten Blasformmaschine in der Draufsicht eine Schieberblasform, bei der sich beispielhaft nur der Schieber unten rechts in der geöffneten Position befindet;
- Fig. 2: einen Schnitt entlang der Linie A-A von Fig. 1;
- Fig. 3: in sehr schematischer Gesamtansicht eine Ausführung eines Transfersystems mit zwei verfahrbaren Schieberblasformen; und
- Fig. 4: eine andere Ausführung eines Transfersystems mit zwei verfahrbaren Schieberblasformen.

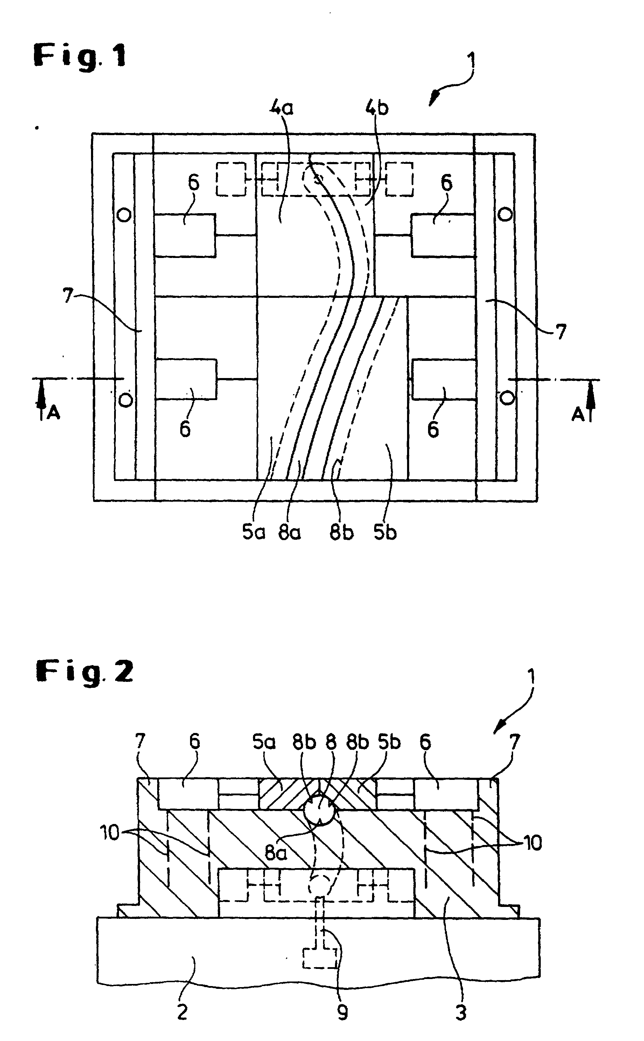

Von einer - im übrigen wie auch eine nicht gezeigte Maschine zum Saugblasen - als solche hinlänglich bekannten Blasformmaschine ist in den Fig. 1 und 2 als Einzelheit ein als Schieberblasform 1 ausgebildetes Blasformwerkzeug gezeigt. Die Schieberblasform 1 besteht aus einem auf einer Auflage 2 angeordneten Unterblock 3 und darauf - im Ausführungsbeispiel - zwei einander paarweise gegenüberliegenden Einzelschiebern 4a, 4b bzw. 5a, 5b. Die Stellzylinder 6 der Schieber 4a, 4b bzw. 5a, 5b stützen sich gemäß Fig. 2 an Stegen 7 unmittelbar am Unterblock 3 selbst ab; alternativ ist es möglich, den Unterblock 3 in einen nach oben über den Unterblock 3 vorragenden Rahmen einzusetzen, der dann die Abstützung übernehmen könnte.

Das einen schlauchartigen Vorformling aufnehmende und die Kontur des Fertigartikels bestimmende Formnest 8 ist mit seiner unteren Artikelgeometrie 8a in den Unterblock 3 eingearbeitet, während sich komplementäre, die obere Artikelgeometrie definierenden Formnestkavitäten 8b jeweils zu etwa einem Viertel der Geometrie des Fertigartikels in den einander gegenüberliegenden Schiebern 4a, 4b bzw. 5a, 5b befinden. Bei geöffneten Schiebern, wie beispielhaft für den Schieber 5b rechts unten in Fig. 1 gezeigt, wird ein schlauchartiger Vorformling in die Kavität der unteren Artikelgeometrie 8a des Unterblockes 3, d.h. des von diesem bereitgestellten Teil-Formnestes eingelegt, und nachdem die Schieber 4a, 4b bzw. 5a, 5b, deren genaue Anzahl im Einzelfall von den Abmessungen des Fertigartikels bestimmt wird, sämtlich geschlossen, d.h. zugefahren sind, wird durch Einschießen eines in der Schieberblasform 1 integrierten Blasdomes bzw. einer Blasnadel 9 das Aufblasen des in dem Formnest dann über seinen gesamten Umfang eingeschlossenen Vorformlings zu einem Fertigartikel eingeleitet. Die für die Bewegungen der Stellzylinder 6 erforderlichen Druckmittelzuleitungen 10 können hierbei, wie in Fig. 2 gestrichelt schematisch angedeutet, fest im Unterblock 3 angeordnet werden.

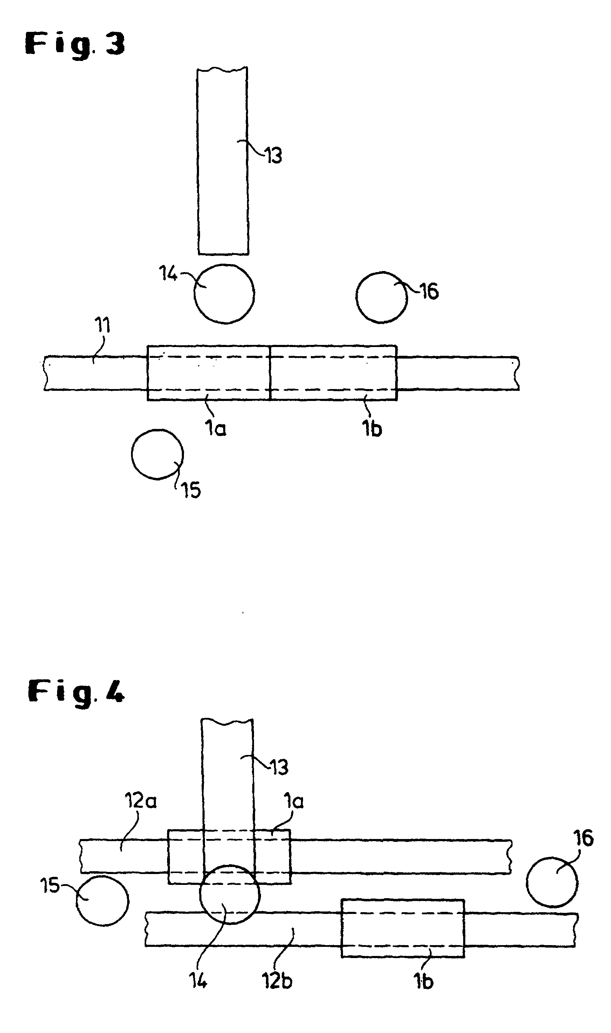

In den Schema-Figuren 3 und 4 sind auf linearen Transfereinrichtungen 11 bzw. 12a, 12b in Form von Verfahrwegen zwei Schieberblasformen 1a, 1b angeordnet, was einen wechselweisen Betrieb und damit eine Erhöhung der Leistung ermöglicht, indem während der Auskühlzeit des in der ersten Schieberblasform 1a aufgeblasenen Artikels die zweite Schieberblasform 1b unter den an einen Extruder 13 angeschlossenen Extrusionskopf 14 verfahren, so daß dann schon gleich ein weiterer Fertigartikel hergestellt werden kann. Das Einlegen des schlauchartigen Vorformlings in die geöffnete Schieberblasform bzw. das Entnehmen des Fertigartikels geschieht mit einem Einlege- bzw. einem Entnahmeroboter 15 bzw. 16.

Die in einer Blasformmaschine - entweder senkrecht oder horizontal - angeordnete Schieberblasform 1 ermöglicht einen Betrieb ohne aufwendige Schließeinheit und erfordert keine Formtrennung von Formhälften mehr; es brauchen vielmehr lediglich nur noch die Schieberbewegungen angesteuert zu werden.

## Patentansprüche

1. Verfahren zum Herstellen von abfallarmen 30-Teilen, insbesondere auf einer Blasformmaschine, die einen einen schlauchartigen Vorformling erzeugenden Extrusions- bzw. Coextrusionskopf, einen Schlauchabschneider, einen als Wendevorrichtung ausgebildeten Greifer zum Einlegen des Vorformlings in ein in einem Blasformwerkzeug (1) eingearbeitetes Formnest (8) bzw. eine Gravur, einen Blasdorn bzw. -nadel und eine Fertigartikel-Entnahmeeinrichtung aufweist,
**dadurch gekennzeichnet,**
**daß** der von der Wendevorrichtung ergriffene Vorformling in eine durch Auffahren von komplementäre Formnestkavitäten (8a, 8b) aufweisenden Schiebern (4a, 4b; 5a, 5b) geöffnetes Teil-Formnest einer ohne eine Schließeinheit betriebenen Blasform (1) eingelegt und nach dem Zufahren der Schieber zu einem Fertigartikel aufgeblasen wird, wobei die Schieber die Schließkraft aufbringen.

2. Vorrichtung zum Herstellen von abfallarmen 3D-Teilen, insbesondere auf einer Blasformmaschine, die einen schlauchartigen Vorformling erzeugenden Extrusions- bzw. Coextrusionskopf, einen Schlauchabschneider, einen als Wendevorrichtung ausgebildeten Greifer zum Einlegen des Vorformlings in ein in einem Blasformwerkzeug (1) eingearbeitetes Formnest (8) bzw. eine Gravur, einen Blasdorn bzw.-nadel und eine Fertigartikel-Entnahmeeinrichtung aufweist, insbesondere zum Durchführen des Verfahrens nach Anspruch 1,
**dadurch gekennzeichnet,**
**daß** die Blasformmaschine mit einer Schieberblasform (1) ausgebildet ist, die einzelne, einander gegenüberliegend angeordnete, komplementäre Formnestkavitäten (8a, 8b) aufweisende, die Schließkraft aufbringende Schieber (4a, 4b; 5a, 5b) besitzt.

3. Vorrichtung nach Anspruch 2,
**dadurch gekennzeichnet,**
**daß** Stellzylinder (6) der Schieber (4a, 4b, 5a, 5b) an einen Blasformrahmen abgestützt sind.

4. Vorrichtung nach Anspruch 2 oder 3,
**dadurch gekennzeichnet,**
**daß** die Schieberblasform (1) aus einem massiven Unterblock (3), der das Formnest (8a) für die untere Artikelgeometrie aufweist, und darauf angeordneten Schiebern (4a, 4b; 5a, 5b), die einander ergänzend mit den Formnestkavitäten (8b) für die obere Artikelgeometrie versehen sind, besteht.

5. Vorrichtung nach Anspruch 4,
**dadurch gekennzeichnet,**
**daß** der Unterblock (3) aus Aluminium besteht.

6. Vorrichtung nach Anspruch 4 oder 5,
**dadurch gekennzeichnet,**
**daß** die Schieber (4a, 4b; 5a, 5b) am Unterblock (3) abgestützt sind.

7. Vorrichtung nach einem der Ansprüche 4 bis 6,
**dadurch gekennzeichnet,**
**daß** in dem Unterblock (3) feste, an den Stellzylindern (6) der Schieber angeschlossene Druckmittel-Zuführungsleitungen (10) ausgebildet sind.

8. Vorrichtung nach einem der Ansprüche 2 bis 7,
**dadurch gekennzeichnet,**
**daß** zumindest zwei Schieberblasformen (1a, 1b) auf einer drehbaren oder linearen Transfereinrichtung (11; 12a, 12b) angeordnet sind.

## Claims

1. A method for producing low-wastage 3-D parts, in particular on a blow moulding machine, comprising an extrusion head or coextrusion head which produces a tubular preform; an extruded profile cutting device; a gripper designed as a turning device for inserting the preform in a form nest (8) or an engraving worked into a blow moulding tool (1); a blowing mandrel or blowing needle; and a device for removing the finished article,
**characterised in that**
the preform gripped by the turning device is inserted into an open part form nest, by opening slides (4a, 4b; 5a, 5b) comprising complementary form nest cavities (8a, 8b) of a blowing mould (1) operated without a closing unit; with said preform, after closure of the slides, being blown to a finished article, wherein the slides produce the closing force.

2. A device for producing low-wastage 3-D parts, in particular on a blow moulding machine, comprising an extrusion head or coextrusion head which produces a tubular preform; an extruded profile cutting device; a gripper designed as a turning device for inserting the preform in a form nest (8) or an engraving worked into a blow moulding tool (1); a blowing mandrel or blowing needle; and a device for removing the finished article, in particular for implementing the method according to claim 1,
**characterised in that**
the blow moulding machine comprises a slide blow mould (1) which has individual slides (4a, 4b; 5a, 5b) which comprise form nest cavities (8a, 8b) which are arranged opposite each other and which complement each other; with said slides providing the closing force.

3. The device according to claim 2,
**characterised in that**
actuating cylinders (6) of the slides (4a, 4b; 5a, 5b) are supported by a blow moulding frame.

4. The device according to claim 2 or 3,
**characterised in that**
the slide blow mould (1) comprises a massive sub-block (3) which comprises the form nest (8a) for the lower article geometry, and slides (4a, 4b; 5a, 5b) arranged thereon, which slides comprise complementary form nest cavities (8b) for the upper article geometry.

5. The device according to claim 4,
**characterised in that**
the sub-block (3) comprises aluminium.

6. The device according to claim 4 or 5,
**characterised in that**
the slides (4a, 4b; 5a, 5b) are supported by the sub-block (3).

7. The device according to one of claims 4 to 6,
**characterised in that**
in the sub-block (3) there are fixed pressure means supply lines (10) which are connected to the actuating cylinders (6) of the slides.

8. The device according to one of claims 2 to 7,
**characterised in that**
at least two slide blow moulds (1a, 1b) are arranged on a rotatable or linear transfer device (11; 12a, 12b).

## Revendications

1. Procédé pour fabriquer des pièces en 3D avec peu de déchets, en particulier sur une machine à souffler, qui présente une tête d'extrusion ou de co-extrusion générant une préforme du type flexible, un séparateur de flexible, un grappin conçu comme un dispositif de renversement pour l'insertion de la préforme dans une cavité de moulage (8) intégrée dans un outil de soufflage (1) ou une gravure, un mandrin de soufflage ou une aiguille de soufflage et un dispositif de prélèvement d'article fini,
**caractérisé**
**en ce que** la préforme saisie par le dispositif de renversement est placée dans une cavité de moulage partielle d'un moule de soufflage (1) exploité sans une unité de fermeture, laquelle cavité est ouverte par l'avancée de coquilles (4a, 4b, 5a, 5b) présentant des cavités de moulage complémentaires (8a, 8b), et en ce que le préformé est soufflé après la fermeture des coquilles pour faire un produit fini, moyennant quoi les coquilles appliquent la force de fermeture.

2. Dispositif pour fabriquer des pièces en 3D avec peu de déchets, en particulier sur une machine à souffler, qui présente une tête d'extrusion ou de co-extrusion générant une préforme du type flexible, un séparateur de flexible, un grappin conçu comme un dispositif de renversement pour l'introduction de la préforme dans une cavité de moulage (8) intégrée dans un outil de soufflage (1) ou une gravure, un mandrin ou une aiguille de soufflage et un dispositif de prélèvement d'article fini, en particulier pour l'application du procédé selon la revendication 1,
**caractérisé**
**en ce que** la machine à souffler est conçue avec un moule de soufflage à coquilles (1), qui présente des coquilles (4a, 4b, 5a, 5b) individuelles, disposées les unes en face des autres, présentant des cavités de moule complémentaires (8a, 8b) et appliquant la force de fermeture.

3. Dispositif selon la revendication 2,
**caractérisé**
**en ce que** les cylindres de commande (6) des coquilles (4a, 4b, 5a, 5b) sont supportés sur un cadre de moule de soufflage.

4. Dispositif selon la revendication 2 ou 3,
**caractérisé**
**en ce que** le moule de soufflage à coquilles (1) présente un bloc inférieur (3) massif qui présente la cavité de moule (8a) pour la géométrie inférieure de l'article, et des coquilles (4a, 4b ; 5a, 5b) disposées dessus, qui sont pourvues de façon complémentaire des cavités de moulage (8b) pour la géométrie supérieure de l'article.

5. Dispositif selon la revendication 4,
**caractérisé**
**en ce que** le bloc inférieur (3) est en aluminium.

6. Dispositif selon la revendication 4 ou 5,
**caractérisé**
**en ce que** les coquilles (4a, 4b ; 5a, 5b) sont supportées sur le bloc inférieur (3).

7. Dispositif selon l'une quelconque des revendications 4 à 6,
**caractérisé**
**en ce que** des lignes d'arrivée pour agent de pression (10) fixes et raccordées aux cylindres de commande (6) des coquilles sont agencées dans le bloc inférieur (3).

8. Dispositif selon l'une quelconque des revendications 2 à 7,
**caractérisé**
**en ce qu'**au moins deux moules de soufflage à coquilles (1a, 1b) sont disposés sur un système de transfert (11; 12a, 12b) pivotant ou linéaire.
